Europäisches Patentamt

European Patent Office

Office européen des brevets

(11) Veröffentlichungsnummer: **0 135 130**
**A2**

(12) **EUROPÄISCHE PATENTANMELDUNG**

(21) Anmeldenummer: **84109601.9**

(22) Anmeldetag: **13.08.84**

(51) Int. Cl.⁴: **C 08 G 75/23**

(30) Priorität: **20.08.83 DE 3330154**

(43) Veröffentlichungstag der Anmeldung:
**27.03.85 Patentblatt 85/13**

(84) Benannte Vertragsstaaten:
**BE DE FR GB IT NL**

(71) Anmelder: **BASF Aktiengesellschaft
Carl-Bosch-Strasse 38
D-6700 Ludwigshafen(DE)**

(72) Erfinder: **Blinne, Gerd, Dr.
Im Woogtal 7
D-6719 Bobenheim(DE)**

(72) Erfinder: **Pipper, Gunter
Schlangenthaler Weg 10
D-6702 Bad Duerkheim(DE)**

(72) Erfinder: **Stegmaier, Wolfgang, Dr.
Im Wachtelschlag 6
D-6733 Hassloch(DE)**

(54) **Verfahren zur Herstellung von Polyethern.**

(57) Verfahren zur Herstellung von Polyethern durch Polykondensation von im wesentlichen äquivalenten Mengen von 2,2-Bis-(4-oxyphenyl)-propan, das teilweise durch weitere Bisphenole ersetzt sein kann, mit Bis-(4-chlorphenyl)-sulfon, das teilweise durch weitere Dihalogenbenzolverbindungen ersetzt sein kann, wobei man

a) mindestens 50 Molprozent 2,2-Bis-(4-oxyphenyl)-propan, bezogen auf die Menge der Bisphenole, einsetzt,

b) mindestens 50 Molprozent Bis-(4-chlorphenyl)-sulfon, bezogen auf die Menge der Dihalogenbenzolverbindungen, einsetzt,

c) die Umsetzung in N-Methylpyrrolidon durchführt,

d) wasserfreies Kaliumcarbonat verwendet und

e) N-Methylpyrrolidon durch Verdampfen entfernt.

EP 0 135 130 A2

Croydon Printing Company Ltd

Verfahren zur Herstellung von Polyethern

Aus der DE-AS 1 545 106 ist ein Verfahren zur Herstellung von linearen Polyarylenpolyethern bekannt, bei dem man Alkalimetalldoppelsalze von zweiwertigen mono- oder dinuklearen Phenolen, wie Bis-(4-oxyphenyl)--propan in äquimolekularen Mengen mit einer Dihalogenbenzolverbindung, wie Bis-(4-chlorphenyl)-sulfon umsetzt. Die Herstellung des Alkalimetalldoppelsalzes erfolgt durch Umsetzung mit wäßriger Kalilauge, wobei durch Agglomerisation erhebliche Schwierigkeiten eintreten. Als Lösungmittel werden Sulfoxide oder Sulfone und zusätzlich Azoetrope bildende Hilfsmittel verwendet. Die Gewinnung des Polymeren erfolgt durch Fällung aus der Lösung. Die erhaltenen Polymeren sind hinsichtlich ihrer Transparenz und des Gehaltes an Lösungsmitteln verbesserungsbedürftig.

Nach dem in der DE-OS 1 957 091 und der canadischen Patentschrift 847 963 beschriebenen Verfahren zur Herstellung von Polyethern unter Mitverwendung von Dimethylformamid bzw. Sulfonen sowie Azeotrope bildenden Hilfslösungsmitteln wird zwar durch die Verwendung von Alkalicarbonaten anstatt wäßriger Kaliumhydroxidlösung die Agglomeration vermieden. Das durch Ausfällen gewonnene Polymere erfüllt jedoch nicht die Anforderungen hinsichtlich Transparenz und Restgehalt an Lösungsmitteln.

Aus der DE-OS 3 014 230 ist ein Verfahren zur Herstellung von ketogruppenhaltigen Polyethern bekannt, bei dem man neben Azeotropbildnern aprotische Lösungsmittel, wie N-substituierte Säureamide, Sulfoxide, Sulfone u.a. N-Methylpyrrolidon, als Lösungsmittel verwendet. Die Gewinnung des Polymeren kann nach mehreren Methoden wie Ausfällen, Versprühen oder Verdampfen des Lösungsmittels erfolgen. Ein Hinweis, wie zu verfahren ist, um die Transparenz des Polymeren und dessen Lösungsmittelgehaltn zu erniedrigen, wird nicht gegeben.

Es war die technische Aufgabe gestellt, Polyarylenpolyether mit verbesserter Transparenz und erniedrigtem Restlösungsmittelgehalt zur Verfügung zu stellen, wobei die Herstellung in kurzer Zeit unter Bildung eines hohen Molekulargewichtes verläuft.

Diese Aufgabe wird gelöst in einem Verfahren zur Herstellung von Polyethern durch Polykondensation von im wesentlichen äquivalenten Mengen von 2,2-Bis-(4-oxyphenyl)-propan, das teilweise durch weitere Bisphenole ersetzt sein kann, mit Bis-(4-chlorphenyl)-sulfon, das teilweise durch weitere Dihalogenverbindung ersetzt sein kann, in Gegenwart von wasserfreien Alkalicarbonat unter Mitverwendung eines aprotischen Lösungs-

Bk/P

BASF Aktiengesellschaft — 2 — O.Z. 0050/36693 0135130

mittels und Gewinnung des Polymeren durch Abtrennen des Lösungsmittels, das dadurch gekennzeichnet ist, daß man

a) mindestens 50 Molprozent 2,2-Bis-(4-oxyphenyl)-propan, bezogen auf die Menge der Bisphenole, einsetzt,

b) mindestens 50 Molprozent Bis-(4-chlorphenyl)-sulfon, bezogen auf die Menge der Dihalogenbenzolverbindungen, einsetzt,

c) die Umsetzung in N-Methylpyrrolidon durchführt,

d) wasserfreies Kaliumcarbonat verwendet und

e) N-Methylpyrrolidon durch Verdampfen entfernt.

Das neue Verfahren hat den Vorteil, daß es in kurzer Zeit unter Bildung eines hohen Molekulargewichtes verläuft. Darüber hinaus hat das neue Verfahren den Vorteil, daß die erzeugten Polymeren eine verbesserte Transparenz aufweisen und einen geringeren Gehalt an Lösungsmitteln haben. Ferner hat das neue Verfahren den Vorteil, daß die Rückgewinnung der Lösungsmittel vereinfacht wird. Zudem sind zusätzlich Azeotropbildner nicht erforderlich.

Als Bisphenol verwendet man mindestens 50 Molprozent, insbesondere mindestens 80 Molprozent, 2,2-Bis-(4-oxyphenyl)-propan, bezogen auf die Menge der Bisphenole. Daneben können weitere Bisphenole, z.B. Hydrochinon, Resorcin, 4,4'-Biphenol, Bis-(4-oxyphenyl)-keton oder Bis-(4-oxyphenyl)--sulfon, mitverwendet werden.

Erfindungsgemäß setzt man mindestens 50 Molprozent, insbesondere mindestens 80 Molprozent, Bis-(4-chlorphenyl)-sulfon, bezogen auf die Menge der Dihalogenbenzolverbindungen, ein. Zusätzlich können andere Dihalogenbenzolverbindungen, wie Bis-(4-chlorphenyl)-keton, 1,4-Bis-(4-chlorbenzoyl)-benzol, 1,4-Bis-(4-chlorbenzolsulfonyl)-benzol, 4,4'-Bis-(4--chlorbenzoyl)-diphenylether, 4,4'-Bis-(4-chlorbenzoyl)-diphenylsulfid, 4,4'-Bis-(4-chlorbenzoyl)-diphenyl, 4,4'-Bis-(4-chlorbenzolsulfonyl)--diphenylether, Bis-(4-fluorphenyl)-keton, 1,4-Bis-(4-fluorbenzoyl)--benzol oder 4,4'-Bis-(4-fluorbenzoyl)-diphenylether mitverwendet werden.

Bisphenole und Dihalogenbenzolverbindungen setzt man im wesentlichen in äquivalenten Mengen ein. Z.B. wendet man je Mol Bisphenol 0,9 bis 1,1 Mole, vorzugsweise ungefähr 1 Mol Dihalogenverbindung, an.

Die Umsetzung wird unter Mitverwendung von wasserfreiem Kaliumcarbonat durchgeführt. Ein Teil des Kaliumcarbonats, z.B. bis zu 50 Molprozent, können durch Natriumcarbonat ersetzt werden. Je Mol Bisphenol verwendet man vorteilhaft 1,0 bis 2,2 Mol, insbesondere 1,0 bis 1,2 Mol, wasserfreies Kaliumcarbonat an.

Die Umsetzung wird in N-Methylpyrrolidon als Lösungsmittel durchgeführt. Vorteilhaft verwendet man soviel N-Methylpyrrolidon, daß man eine 10- bis 40-gewichtsprozentige Lösung des Polymeren erhält.

Die Umsetzung führt man beispielsweise durch, indem man die genannten Bisphenole und Bishalogenbenzolverbindungen zusammen mit Kaliumcarbonat in N-Methylpyrrolidon auf eine Temperatur von 100 bis 200°C, insbesondere 140 bis 190°C, erhitzt und Wasser abdestilliert, bis der größte Teil des Reaktionswassers, z.B. mehr als 90 %, entfernt sind. Die Umsetzung wird unter Normaldruck oder schwach erhöhtem Druck, z.B. bis zu 5 bar, innerhalb von 1 bis 3 Stunden durchgeführt. Anschließend wird das Reaktionsgemisch weitere Zeit, z.B. bis zu 10 Stunden, unter guter Durchmischung auf der genannten Temperatur gehalten. Vorteilhaft führt man sämtliche Verfahrensschritte einschließlich der Aufarbeitung unter einer Inertgasatmosphäre durch, wobei der Gehalt an molekularem Sauerstoff vorzugsweise unter 100 ppm liegt.

Nach einer modifizierten Arbeitsweise setzt man zunächst die Bisphenole mit Kaliumcarbonat in N-Methylpyrrolidon um, destilliert Wasser ab und setzt dann die Bishalogenbenzolverbindungen zu und führt die Kondensation wie oben beschrieben durch.

Nach Erreichen der gewünschten Viskosität wird die Kondensation durch Zugabe von Methylchlorid beendet. Das hierbei anfallende Kaliumchlorid wird nach bekannten Methoden, z.B. Zentrifugieren oder Filtrieren abgetrennt, so daß der Gehalt der Kaliumchlorid vorteilhaft kleiner 0,05 Gewichtsprozent, bezogen auf das Polymere, beträgt.

Aus der so erhaltenen Lösung von Polyethern wird N-Methylpyrrolidon durch Verdampfen entfernt. Vorteilhaft verfährt man hierbei so, daß man zunächst die 10 bis 40 Gewichtsprozent Polymeres enthaltende Lösung auf einen Gehalt von 50 bis 95 Gewichtsprozent Polymeres vorkonzentriert. Vorteilhaft verfährt man, wenn man die Polymerlösung in einem Rohrverdampfer, dessen Rohre gegebenenfalls auch gequetscht sein können, auf eine Temperatur von 150 bis 350°C erhitzt und gleichzeitig oder beim Erhitzen unter Druck in einem nachgeschalteten Entspannungsgefäß N-Methylpyrrolidon verdampft. Der hierbei angewandte Druck richtet sich nach den angewandten Temperaturen und den zu verdampfenden Mengen an N-Methyl-pyrrolidon und kann im Rohr zwischen 2 und 20.000, vorzugsweise 100 und 5.000 mbar betragen. Es hat sich als vorteilhaft erwiesen, im Rohrverdampfer eine Verweilzeit von 5 bis 500 Sekunden, insbesondere 10 bis 100 Sekunden, einzuhalten. Der sich hierbei bildende Sumpf mit einem Gehalt von 50 bis 95 Gewichtsprozent Polymerem wird dann einer zweiten Stufe zugeführt, in der unter fortwährender Ausbildung neuer Oberflächen bei einer Temperatur oberhalb des Schmelzpunktes des Polymeren, vorteilhaft bei 250 bis 350°C, unter vermindertem Druck, z.B. von 2 bis 200 mbar restliches N-Methylpyrrolidon abdestilliert wird. Geeignete Vorrichtungen hierfür sind beispielsweise Extruder mit Entgasungsöffnungen, insbesondere Doppelschneckenextruder mit mehreren, z.B. bis zu 4 Entgasungsöffnungen. Andere geeignete Vorrichtungen sind z.B. Kneter oder Vorrichtungen, die zur Ausbildung von dünnen Filmen geeignet sind, wie Ringscheibenreaktoren. In einer anderen Ausführungsart kann die Verdampfung der ersten Stufe bis zu einem Gehalt von 50 bis 95 Gewichtsprozent Polyether auch bereits in einer Apparatur durchgeführt werden, in der unter ständiger Bildung neuer Oberflächen verdampft wird. Anschließend wird in einer analog oder anders aufgebauten zweiten Verdampfungsstufe wie oben beschrieben weiter abdestilliert.

Erfindungsgemäß erzeugte Polyether eignen sich zur Herstellung von temperaturstabilen Formteilen.

Das Verfahren nach der Erfindung sei in folgenden Beispielen veranschaulicht. Die genannten Teile sind Gewichtsteile. Als Transparent wird die Transmission einer filtrierten Lösung von 15 Gewichtsprozent Polyether in N-Methylpyrrolidon bei 500 µm gegenüber reinem Methylpyrrolidon gemessen.

## Beispiel 1

228,3 Teile 2,2-Bis-(4-hydroxyphenyl)-propan und 138,2 Teile wasserfreies Kaliumcarbonat werden in 400 Teile N-Methylpyrrolidon eingetragen, mit Stickstoff inertisiert und unter kräftigem Rühren auf 190°C erhitzt. Das hierbei entstehende Wasser (ca. 18 Teile) wird über eine Kolonne abdestilliert. Dann werden 287,2 Teile Bis-(4-chlorphenyl)-sulfon gelöst in 400 Teilen N-Methylpyrrolidon zugegeben und das Reaktionsgemisch 4 Stunden bei 190°C gerührt. Anschließend wird die Polykondensation durch Zugabe von 10 Teilen Methylchlorid beendet und die Lösung heiß filtriert, um das entstandene Kaliumchlorid abzutrennen. Die erhaltene 35,6 Gewichtsprozent Polymeres enthaltende Lösung wird in einem Röhrenwärmetauscher auf 200°C erhitzt und N-Methylpyrrolidon unter einem Druck von 80 mbar abdestilliert. Man erhält eine Lösung, die 55 Gewichtsprozent Polymeres enthält. Aus dieser Lösung wird in einem Zweiwellenextruder bei einer Temperatur von 300°C über zwei Entgasungsöffnungen bei einem Druck von 150 bar das restliche N-Methylpyrrolidon abdestilliert. Der so erhaltene Polyether hat eine Viskosität $\eta$ red dl/g von 0,62 (gemessen bei 23°C in N-Methylpyrrolidon), eine Transparenz von 94 % und einen Salzgehalt von 0,02 Gewichtsprozent und einen Restlösungsmittelgehalt von 0,05 Gewichtsprozent.

Beispiel 2

Man verfährt wie in Beispiel 1 beschrieben, gibt jedoch Bis-(4-chlorphenyl)-sulfon bereits bei Beginn der Reaktion zu. Die Reaktionsführung und die Aufarbeitung erfolgt entsprechend Beispiel 1. Man erhält einen Polyether mit einer Viskosität $\eta$ red dl/g von 0,63 (gemessen bei 23°C in N-Methylpyrrolidon) mit einer Transparenz von 92 %, einem Salzgehalt von 0,01 Gewichtsprozent und einem Lösungsmittelgehalt von 0,03 Gewichtsprozent.

Beispiel 3

114,2 Teile 2,2-Bis-(4-hydroxyphenyl)-propan, 125,1 Teile Bis-(4-hydroxyphenyl)-sulfon, 138,2 Teile wasserfreies Kaliumcarbonat und 287,2 Teile Bis-(4-chlorphenyl)-sulfon werden mit 800 Teilen N-Methylpyrrolidon gemischt und unter Rühren 7 Stunden auf 190°C erhitzt, wobei das bei der Reaktion entstehende Wasser über eine Kolonne abdestilliert wird. Die Aufarbeitung erfolgt analog Beispiel 1. Man erhält einen Polyether mit einer Viskosität von $\eta$ red dl/g von 0,59 (gemessen bei 23°C in N-Methylpyrrolidon) mit einer Transparenz von 90 % und einen Restsalzgehalt von 0,01 Gewichtsprozent und einem Restlösungsmittelgehalt von 0,04 Gewichtsprozent.

Beispiel 4

Man verfährt wie in Beispiel 1 beschrieben mit dem Unterschied, daß 69,1 Teile wasserfreies Kaliumcarbonat im Gemisch mit 53,0 Teilen wasserfreiem Natriumcarbonat angewendet werden. Die Reaktionsbedingungen, die Ausgangsstoffe und die Aufarbeitung unterscheiden sich nicht von Beispiel 1. Man erhält Polyether mit einer Viskosität $\eta$ red dl/g (gemessen bei 23°C in N-Methylpyrrolidon) von 0,58 mit einer Transparenz von 93 %, einem Salzgehalt von 0,02 Gewichtsprozent und einen Lösungsmittelgehalt von 0,04 Gewichtsprozent.

## Vergleichsbeispiel 1

228,3 Teile 2,2-Bis-(4-hydroxyphenyl)-propan und 112,2 Teile Kaliumhydroxid, gelöst in 140 Teilen Wasser sowie 1000 Teile Dimethylsulfoxid und 120 Teile Benzol werden unter einer Stickstoffatmosphäre auf Rückflußtemperatur erhitzt und das im Reaktionsgemisch enthaltene Wasser als Azeotrop mit dem Benzol entfernt bis die Rückflußtemperatur 130 bis 135°C erreicht hat. Denn werden 287,2 Teile Bis-(4-chlorphenyl)-sulfon gelöst in 800 Teilen Dimethylsulfoxid zugeführt und das Reaktionsgemisch 8 Stunden auf 130 bis 140°C erhitzt. Die erhaltene Lösung wird unter heftiger Mischung in 6 l Wasser gegossen, wobei das feinverteilte Polymerisat ausfällt. Dieses wird abfiltriert und im Vakuum bei 110°C getrocknet. Man erhält einen Polyether mit einer Viskosität von $\eta$ red dl/g von 0,58 (gemessen bei 23°C in N-Methylpyrrolidon), eine Transparenz von 89 %, einem Salzgehalt von 0,12 Gewichtsprozent und einem Lösungsmittelgehalt von 0,17 Gewichtsprozent.

## Vergleichsbeispiel 2

228,3 Teile 2,2-Bis-(4-hydroxyphenyl)-propan und 138,2 Teile wasserfreies Kaliumcarbonat werden mit 500 Teilen Dimethylformamid gemischt und mit Stickstoff inertisiert. Das Gemisch wird unter kräftigem Rühren auf 140°C erhitzt und Wasser über eine Kolonne abdestilliert. Anschließend werden 287,2 Teile Bis-(4-chlorphenyl)-sulfon in 500 Teilen Dimethylformamid hinzugefügt und das Reaktionsgemisch 24 Stunden auf 140°C erhitzt. Anschließend wird das heiße Reaktionsgemisch filtriert und das Polymere durch Einrühren in 3 l Wasser ausgefällt, abfiltriert und getrocknet. Man erhält einen Polyether mit einer Viskosität $\eta$ red dl/g (gemessen bei 23°C in N-Methylpyrrolidon) von 0,56 mit einer Transparenz von 78 %, einem Salzgehalt von 0,02 Gewichtsprozent und einem Lösungsmittelgehalt von 0,21 Gewichtsprozent.

## Vergleichsbeispiel 3

Man verfährt wie in Beispiel 1 beschrieben, ersetzt jedoch Kaliumcarbonat durch 112,2 Teile Kaliumhydroxid, gelöst in 140 Teilen Wasser. Nach einer Reaktionsdauer von 6 Stunden bei 190°C wird die Polymerlösung in 3 l Wasser eingerührt und das Polymere ausgefällt. Durch Filtrieren und Trocknen erhält man einen Polyether mit einer Viskosität $\eta$ red dl/g von 0,32 (gemessen bei 23°C in N-Methylpyrrolidon) und eine Transparenz von 21 %.

## Vergleichsbeispiel 4

Man verfährt wie in Beispiel 1 beschrieben, setzt dem Reaktionsgemisch jedoch von Anfang an 100 Teile Toluol zu und destilliert das Wasser als Azeotrop mit Toluol ab. Nach einer Umsetzungsdauer von 6 Stunden bei 190°C und analoger Aufarbeitung wie in Beispiel 1 beschrieben, erhält man einen Polyether mit einer Viskosität $\eta$ red dl/g von 0,61 (gemessen bei 23°C in N-Methylpyrrolidon), einer Transparenz von 72 %, einem Salzgehalt von 0,03 Gewichtsprozent und einem Lösungsmittelgehalt von 0,05 Gewichtsprozent.

Patentansprüche

1. Verfahren zur Herstellung von Polyethern durch Polykondensation von im wesentlichen äquivalenten Mengen von 2,2-Bis-(4-oxyphenyl)-propan, das teilweise durch weitere Bisphenole ersetzt sein kann, mit Bis-(4-chlorphenyl)-sulfon, das teilweise durch weitere Dihalogenbenzolverbindungen ersetzt sein kann, in Gegenwart von wasserfreiem Alkalicarbonat unter Mitverwendung eines aprotischen Lösungsmittels und Gewinnung des Polymeren durch Abtrennen des Lösungsmittels, dadurch gekennzeichnet, daß man

a) mindestens 50 Molprozent 2,2-Bis-(4-oxyphenyl)-propan, bezogen auf die Menge der Bisphenole, einsetzt,

b) mindestens 50 Molprozent Bis-(4-chlorphenyl)-sulfon, bezogen auf die Menge der Dihalogenbenzolverbindungen, einsetzt,

c) die Umsetzung in N-Methylpyrrolidon durchführt,

d) wasserfreies Kaliumcarbonat verwendet und

e) N-Methylpyrrolidon durch Verdampfen entfernt.

2. Verfahren nach Anspruch 1, dadurch gekennzeichnet, daß man mindestens 80 Molprozent 2,2-Bis-(4-oxyphenyl)-propan, bezogen auf die Menge Bisphenole, einsetzt.

3. Verfahren nach den Ansprüchen 1 und 2, dadurch gekennzeichnet, daß man mindestens 80 Molprozent Bis-(4-chlorphenyl)-sulfon, bezogen auf die Menge der Dihalogenbenzolverbindungen, einsetzt.

4. Verfahren nach den Ansprüchen 1 bis 3, dadurch gekennzeichnet, daß man die erhaltene 10 bis 40 gewichtsprozentige Polyetherlösung innerhalb von 5 bis 500 Sekunden auf 150 bis 350°C unter Verdampfen von N-Methylpyrrolidon erhitzt und aus der so erhaltenen 50 bis 95 Gewichtsprozent Polyether enthaltenden Lösung, N-Methylpyrrolidon unter fortwährender Ausbildung neuer Oberflächen verdampft.